# EUROPÄISCHE PATENTSCHRIFT

(11) **EP 1 712 450 B1**
(45) Veröffentlichungstag und Bekanntmachung des Hinweises auf die Patenterteilung: **23.12.2009**
(21) Anmeldenummer: 06001784.5
(22) Anmeldetag: 28.01.2006
(51) Int. Cl.: B62D 21/11

(54) **Als Fahrschemel ausgebildeter Hilfsrahmen für Kraftfahrzeuge**
Suspension subframe for a motor vehicle
Cadre auxiliaire de guidage de roues pour un véhicule automobile

(30) Priorität: 13.04.2005 DE 102005017029
(43) Veröffentlichungstag der Anmeldung: 18.10.2006
(73) Patentinhaber: AUDI AG, 85045 Ingolstadt (DE)
(72) Erfinder: Michel, Wilfried, 93339 Riedenburg (DE)
(74) Vertreter: Asch, Konrad

(56) Entgegenhaltungen:
- EP-A- 0 941 912
- DE-A1- 3 242 604
- DE-A1- 4 406 129
- DE-A1- 19 943 773
- US-A- 2002 050 413

## Beschreibung

Die Erfindung betrifft einen als Fahrschemel ausgebildeten Hilfsrahmen für Kraftfahrzeuge nach dem Oberbegriff des Anspruchs 1.

Als Fahrschemel ausgebildete Hilfsrahmen für Kraftfahrzeuge, die auch als Achsträger bezeichnet werden, sind allgemein bekannt und werden regelmäßig mit der Karosserie über entsprechende Anbindungsstellen verschraubt. Derartige Hilfsrahmen können sowohl im Bereich der Vorderachsen als auch im Bereich der Hinterachsen Verwendung finden.

Aus der EP 0 941 912 B1 ist bereits ein als Fahrschemel ausgebildeter Hilfsrahmen für Kraftfahrzeuge mit seitlichen Hilfsrahmen-Längsträgern bekannt, zwischen denen ein flächiges Versteifungselement angeordnet ist. Konkret bildet der Hilfsrahmen hier einen Vorderachsträger aus und weist an jedem Längsträger einen Lagerbock zur Aufnahme eines Lenkers des Fahrzeug-Fahrwerks auf. Das flächige Versteifungselement ist durch ein Aluminiumblech mit einer Wandstärke von ca. 3 bis 4 mm gebildet und weist eine im Wesentlichen viereckige Geometrie auf, so dass das Versteifungselement in Fahrtrichtung betrachtet jeweils an beiden seitlichen Hilfsrahmen-Längsträgern mit je einer Schraubverbindung vor und hinter den Lagerböcken lösbar mit den beiden Längsträgern verbunden ist. Das Versteifungselement kann in seinem flächigen Bereich ferner Versteifungssicken aufweisen und mit einem akustisch dämmenden Material versehen sein. Mit einem derartigen viereckigen, flächigen Aluminiumblech als Versteifungselement soll ein sogenanntes "Schubfeld" erzeugt werden, mittels dem eine beispielsweise aufprallbedingte Kraft, die in einen der Längsträger eingeleitet wird, auf den gegenüberliegenden Längsträger übertragen werden kann. Wesentlich für diese Kraftübertragung auf den gegenüberliegenden Längsträger soll hierbei die Anbindung des Versteifungselementes an beiden gegenüberliegenden Hilfsrahmen-Längsträgern jeweils vor und hinter den Lagerböcken sein.

Aus der DE 199 43 773 A1 ist eine gattungsgemäße Hilfsrahmenanordnung für einen Fahrzeugaufbau bekannt. Die Hilfsrahmenanordnung weist ein flächenhaftes Crashelement auf, das mit zwei seitlich gegenüberliegenden Längsstreben des Hilfsrahmens verbunden ist. Hierdurch kann das Energieaufnahmevermögen im Falle eines Aufpralls verbessert werden. Aus der DE 44 06 129 A1 ist allgemein eine Bodenanlage eines Kraftfahrzeuges bekannt, der eine fordere und eine hintere Knautschzone bildet. Die Bodenanlage weist eine zerstörend zusammendrückbare Blechstruktur auf. Die Blechstruktur umfasst zwei im Höhenabstand voneinander gehaltene Blechplatten. Im Crashfall wird die Blechstruktur unter Absorption von Stoßenergie zusammengedrückt.

Ein ähnlicher Aufbau ist auch aus der EP 0 891 915 B1 bekannt, bei der das flächige Versteifungselement ebenfalls über vier Anbindungspunkte insgesamt verfügt und bei der jeweils zwei Anbindungspunkte an den gegenüberliegenden Hilfsrahmen-Längsträgern liegen. Das Versteifungselement ist hier durch eine Blechplatte gebildet, das zur weiteren Versteifung auch noch Rippen oder Sicken aufweisen kann. Ein derartiges durch Sicken versteiftes Blech als flächiges Versteifungselement ist auch aus der DE-AS 1274899 bekannt.

Aufgabe der Erfindung ist es, einen als Fahrschemel ausgebildeten Hilfsrahmen für Kraftfahrzeuge mit einem flächigen Versteifungselement zwischen seitlichen Hilfsrahmen-Längsträgern zu schaffen, mit dem eine noch bessere Versteifung des Hilfsrahmens und damit der Karosserie selbst möglich ist.

Diese Aufgabe wird gelöst mit den Merkmalen des Anspruchs 1.

Erfindungsgemäß ist das flächige Versteifungselement mehrschichtig als Sandwichbauteil mit einer plattenartigen Oberschale und einer plattenartigen Unterschale sowie mit einer zwischen der Oberschale und der Unterschale angeordneten Energieabsorptionsschicht ausgebildet.

Mit einem derartigen Aufbau lässt sich eine besonders vorteilhafte Energieabsorption erreichen, da mittels der Energieabsorptionsschicht des flächigen Versteifungselementes eine besonders vorteilhafte Energieabsorption in Verbindung mit aufprallbedingten Krafteinleitungen möglich wird, die das Crashverhalten des Kraftfahrzeugs, z. B. im Vorderwagenbereich, günstig und positiv beeinflussen. Des weiteren bildet ein derartiges mehrlagiges, flächiges Versteifungselement auch einen besonders vorteilhaften Schutz für darüber liegende Bauteile aus, insbesondere für Bauteile einer Lenkungsvorrichtung, wie z. B. Leitungen, Hydraulikanschlüsse, Verschraubungen, Sensoren bzw. auch dem Ventildom selbst, da es z. B. in Verbindung mit sogenannten "Aufsetzern" des Kraftfahrzeugs aufgrund der Energieabsorption durch das Versteifungselement regelmäßig lediglich zu einer Verformung des Versteifungselementes kommt, so dass die auftretenden Kräfte gewissermaßen nicht bis zur Karosseriestruktur durchschlagen.

Des weiteren kann mit einem derartigen Sandwichbauteil auch das Eigenschwingverhalten des Hilfsrahmens in positiver und günstiger Weise beeinflusst werden.

Weiterhin kann die Oberschale oder die Unterschale zur Ausbildung einer wannenartigen Aufnahmeschale für die Energieabsorptionsschicht einen randseitig wenigstens bereichsweise umlaufenden Randsteg aufweisen. Dies kann grundsätzlich auch bei beiden Schalen der Fall sein, die dann im Bereich der freien Randstegenden miteinander in einer Anlageverbindung anliegen. Bevorzugt ist jedoch eine Ausführungsform, bei der lediglich eine der beiden Schalen, z. B. die Unterschale als Bodenschale bzw. Bodenplatte einen Randsteg aufweist, deren Höhe in etwa der Schichtstärke der Energieabsorptionsschicht entspricht. Dadurch wird erreicht, dass das freie Randstegende an einem Randbereich der anderen plattenartigen Schale, im zuvor genannten Beispiel der Oberschale, angrenzt und mit dieser verbindbar ist, z. B. mittels einer Klebeverbindung oder dergleichen.

In Verbindung mit einer derartigen Ausführungsform ist es auch besonders vorteilhaft, wenn die Energieabsorptionsschicht formschlüssig in der einen wenigstens bereichsweise umlaufenden Randsteg aufweisenden Schale aufgenommen ist, um ein insgesamt kompaktes und optimal auf die jeweiligen Versteifungsverhältnisse abgestimmtes Versteifungselement als Sandwichbauteil auszubilden. Grundsätzlich bestünde jedoch auch die Möglichkeit, dass sich die Energieabsorptionsschicht lediglich über einen Teilbereich der beiden Schalen erstreckt.

Der Aufbau des flächigen Versteifungselementes als Sandwichbauteil ist insbesondere im Hinblick auf ein extrem leichtes und damit nach wie vor gewichtsgünstig aufgebautes Strukturbauteil so dimensioniert, dass die Oberschale und die Unterschale eine gegenüber der Schichtstärke der Energieabsorptionsschicht dünnere Wandstärke aufweisen.

Um die Montage bzw. Demontage von Bauteilen am Hilfsrahmen zu ermöglichen, ist es gemäß einer besonders bevorzugten Ausgestaltung vorteilhaft, dass das flächige Versteifungselement lösbar am Hilfsrahmen festgelegt ist. Diese Festlegung erfolgt vorzugsweise mittels mehrerer Schraubverbindungen, wozu am flächigen Versteifungselement eine vorgegebene Anzahl von Schraubendurchgangslöchern ausgebildet ist. Diesen Schraubendurchgangslöchern ist dann am Hilfsrahmen wiederum jeweils ein Schraubpunkt mit Schraubenmuttern zugeordnet, in die die Befestigungsschrauben zur lösbaren Festlegung des Versteifungselementes am Hilfsrahmen von der Unterschalenseite her einschraubbar sind. Eine derartige lösbare Festlegung mittels Schraubverbindungen ist besonders einfach und auch funktionssicher herzustellen.

Besonders bevorzugt sind die Schraubendurchgangslöcher am Versteifungselement im Bereich lokaler Unterschaleneinzüge ausgebildet, in denen die Schraubenköpfe der Befestigungsschrauben im eingeschraubten Zustand aufgenommen sind. Die Schraubenköpfe sind vorzugsweise vollständig in den Unterschaleneinzügen aufgenommen, damit diese nicht über die Unterschale hervorstehen.

Die lokalen Unterschaleneinzüge sind gemäß einer weiteren bevorzugten und konkreten Ausgestaltung der Erfindung so ausgebildet, dass ein Einzugsbodenbereich der lokalen Unterschaleneinzüge unter Ausbildung einer das Schraubendurchgangsloch umgebenden Schraubenkopfauflage in einer Anlageverbindung an der Oberschale anliegt. Dadurch lässt sich eine besonders günstige Verschraubung und damit Festlegung des Sandwichbauteils am Hilfsrahmen erzielen.

Die Energieabsorptionsschicht kann grundsätzlich auch durch einen Energieabsorptionsschaum gebildet sein. Besonders bevorzugt ist jedoch eine Energieabsorptionsschicht mit einer Wabenstruktur als Wabenstrukturschicht, die in Verbindung mit einem flächigen Versteifungselement besonders günstige Energieabsorptionseigenschaften aufweist. Die Wabenstruktur ist bevorzugt gleichmäßig ausgebildet, z. B. in Verbindung mit sechseckförmigen Waben. Ein weiterer wesentlicher Vorteil einer derartigen Wabenstruktur als Energieabsorptionsschicht ist, dass die Wabenstruktur zusammen mit den vorgesehenen Trägerschalen, bevorzugt einer Oberschale und einer Unterschale, in Leichtbauweise, z. B. aus einem Leichtmetallwerkstoff hergestellt werden können, so dass sich ein extrem leichter Aufbau des Versteifungselementes bei gleichzeitig hoher Steifigkeit erzielen lässt. Als Leichtbauwerkstoff für das Sandwichbauteil eignet sich insbesondere Aluminium. Grundsätzlich könnten jedoch auch Kunststoffe bzw. Verbundwerkstoffe, insbesondere faserverstärkte Kunststoffe oder kohlefaserverstärkte Verbundwerkstoffe als Leichtbauwerkstoffe verwendet werden.

Eine besonders bevorzugte geometrische Ausgestaltung sieht vor, dass das flächige Versteifungselement eine Dreiecksform aufweist, insbesondere die Form eines gleichschenkligen Dreiecks. In Verbindung mit einem derartigen dreieckförmigen Versteifungselement ist vorgesehen, dass das Sandwichbauteil im am Hilfsrahmen montierten Zustand mit einem ersten Dreieckspitzenbereich an einem die beiden Hilfsrahmen-Längsträger verbindenden Hilfsrahmen-Querträger, vorzugsweise in einem mittleren Bereich des Hilfsrahmen-Querträgers, und mit einem zweiten und dritten Dreieckspitzenbereich an in etwa in Fahrzeugquerrichtung gegenüberliegenden Längsträgerbereichen, insbesondere Längsträger-Konsolen, wie z. B. Lenkerkonsolen, angebunden ist. Eine derartige Dreiecksgeometrie ist weniger materialintensiv als die bisher üblichen Vierpunktanbindungen von im wesentlichen viereckigen flächigen Versteifungselementen, wobei erfinderseitige Versuche gezeigt haben, dass sich mit einer derartigen Dreieckskonstruktion eine hervorragende Versteifung des Hilfsrahmens unter Ausbildung eines Schubfeldes ergibt. Dies wird insbesondere durch die Anbindung des einen Dreieckspitzenbereichs am Hilfsrahmen-Querträger ermöglicht. Grundsätzlich kann jedoch der zuvor genannte und beschriebene Sandwichaufbau eines flächigen Versteifungselementes mit sämtlichen Versteifungselementgeometrien realisiert werden, insbesondere auch in Verbindung mit den aus dem Stand der Technik bekannten Vierpunktanbindungs-Versteifungselementen.

Die Erfindung wird nachfolgend anhand einer Zeichnung näher erläutert.

Es zeigen:
- Fig. 1: eine schematische, perspektivische Draufsicht auf einen Hilfsrahmen mit montiertem Lenkgetriebe und erfindungsgemäßem Versteifungselement,
- Fig. 2: eine schematische, perspektivische Unteransicht des Hilfsrahmens vor der Montage des erfindungsgemäßen Versteifungselementes,
- Fig. 3: eine schematische, perspektivische Darstellung entsprechend Fig. 2 mit montiertem Versteifungselement,
- Fig. 4: eine schematische Schnittansicht entlang der Linie A-A der Fig. 3, und
- Fig. 5: eine vergrößerte Detailansicht eines Konsolen- und Anbindungsbereiches eines Hilfsrahmen-Längsträgers.

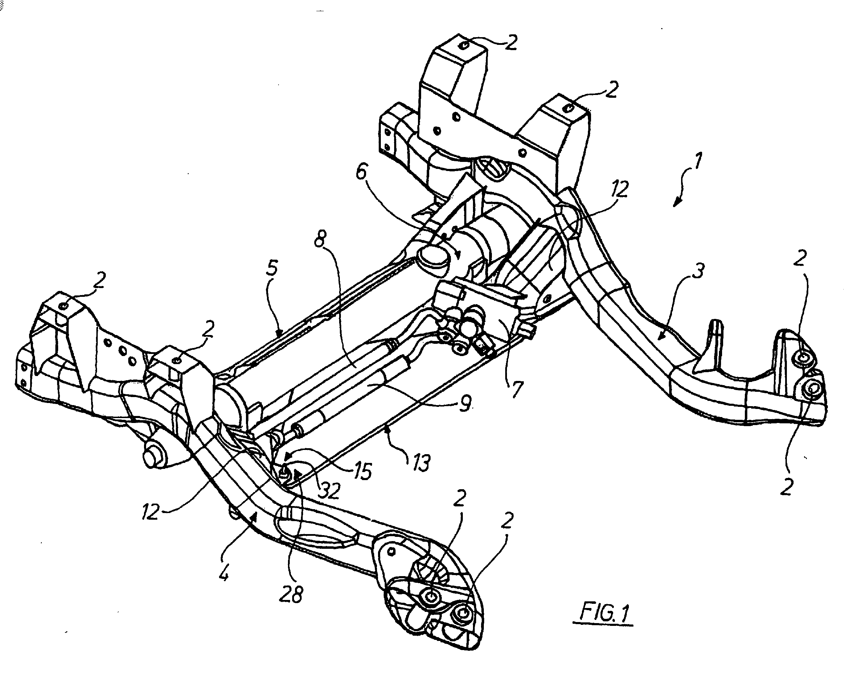

In der **Fig. 1** ist schematisch und beispielhaft ein als Fahrschemel ausgebildeter Hilfsrahmen 1 für ein Kraftfahrzeug gezeigt, der über die Anbindungspunkte 2 mit karosserieseitigen Längsträgern im Vorderwagenbereich des Kraftfahrzeuges angebunden werden kann, was hier jedoch nicht dargestellt ist. Der Hilfsrahmen 1 weist weiter zwei seitliche Hilfsrahmen-Längsträger 3 und 4 auf, die mittels eines Hilfsrahmen-Querträgers 5 miteinander verbunden sind.

Der Hilfsrahmen 1 ist hier mit bereits montierten Lenkungsbauteilen einer hier als Rechtslenker ausgebildeten Lenkungsvorrichtung gezeigt, wobei hier nur beispielhaft ein Lenkgetriebe 6, ein Ventildom 7 sowie Hydraulikleitungen 8, 9 beispielhaft erwähnt werden sollen.

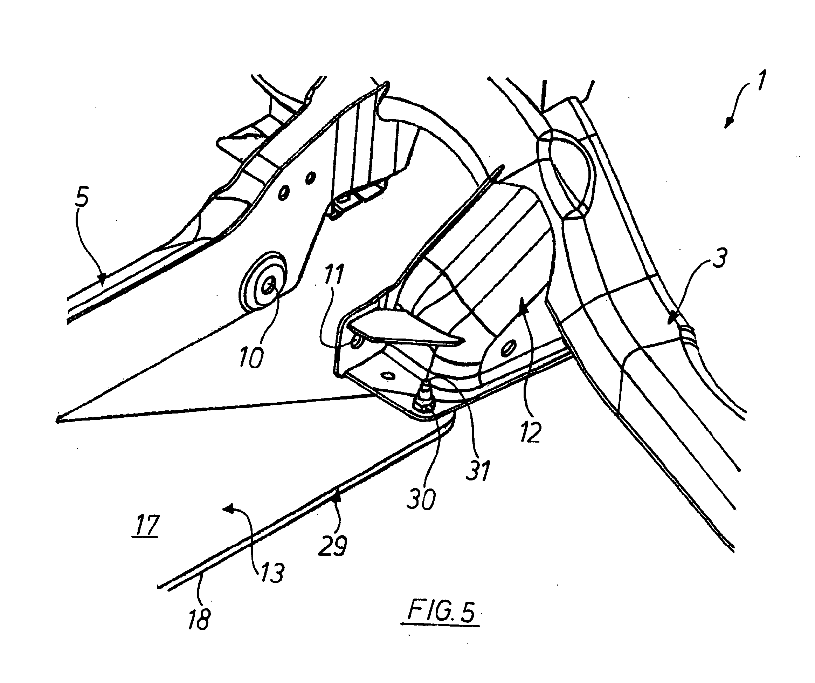

Wie dies im Detail der **Fig. 5** entnommen werden kann, die eine vergrößerte Detailansicht eines Teilbereichs des in der Bildebene der **Fig. 1** rechten Hilfsrahmen-Längsträgers 3 zeigt, erfolgt die Festlegung des Lenkgetriebes 6 an den beiden Befestigungsstellen 10 und 11, wobei die erste Befestigungsstelle 10 am Hilfsrahmen-Querträger 5 und die zweite Befestigungsstelle 11 an einer Lenkerkonsole ausgebildet ist.

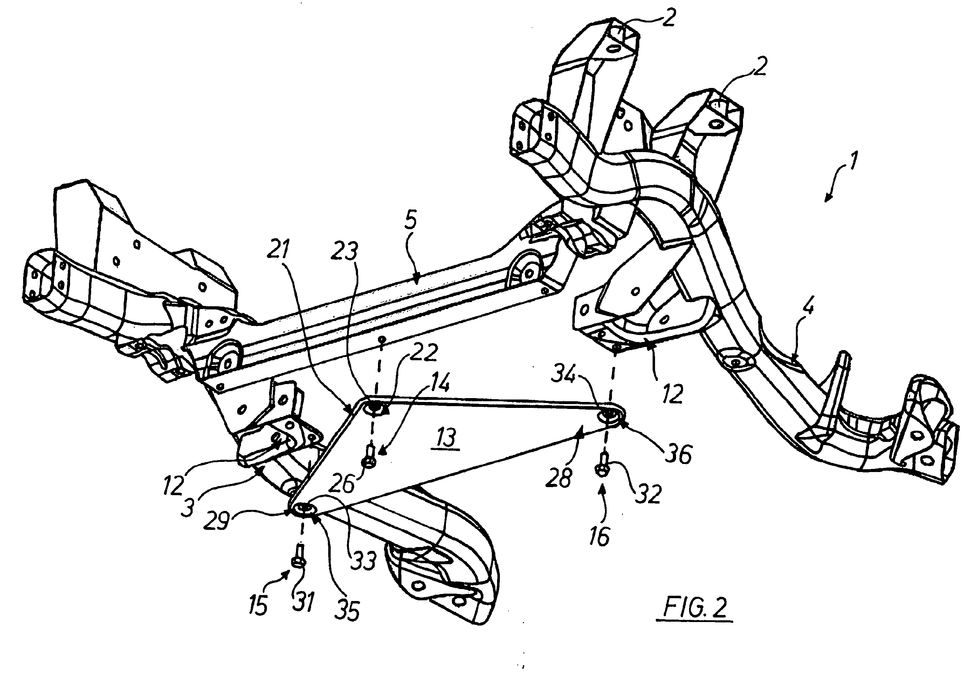

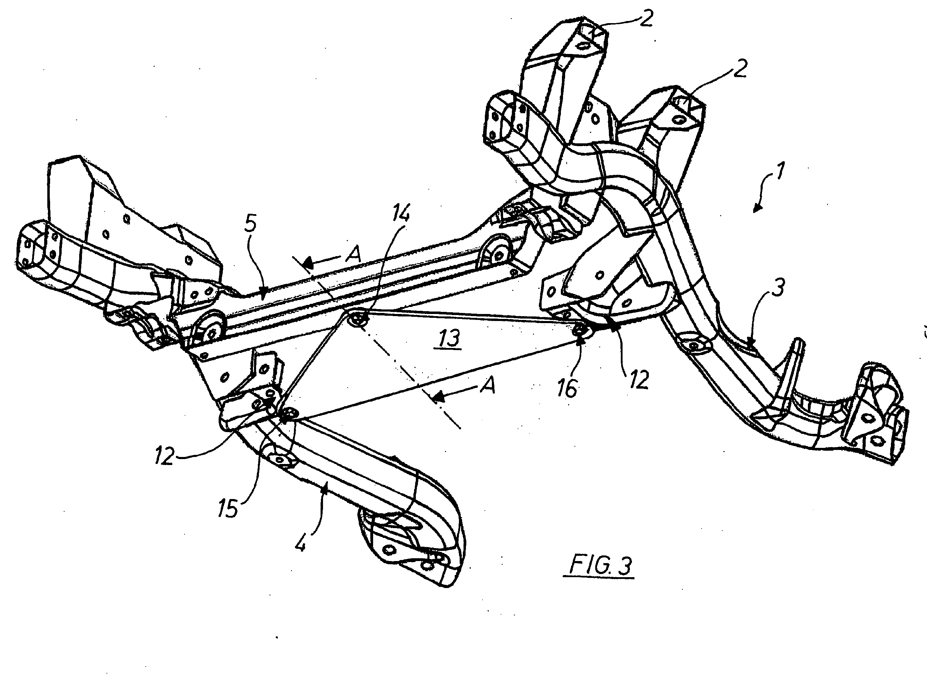

Wie dies der **Fig. 1** und insbesondere auch den **Fig. 2** **und** **3** entnommen werden kann, ist am Hilfsrahmen 1 ferner noch von unten her ein in der Form eines gleichschenkligen Dreiecks ausgebildetes Sandwichbauteil 13 als flächiges Versteifungselement mittels dreier eckseitig angeordneter Schraubverbindungen 14, 15 und 16 lösbar befestigt.

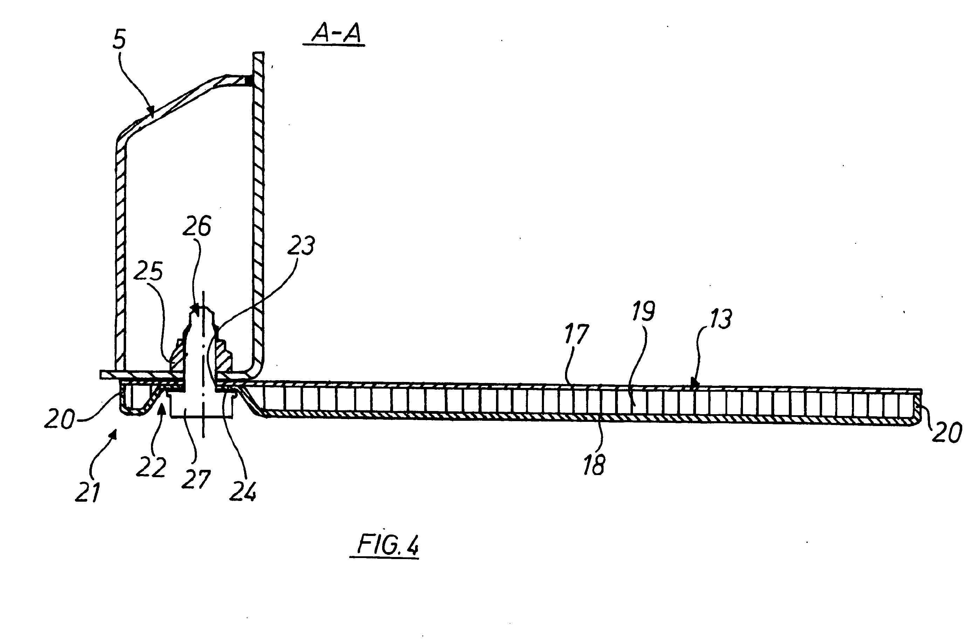

Wie dies der **Fig. 4****,** die einen Schnitt entlang der Linie A-A der **Fig. 3** zeigt, entnommen werden kann, ist das Sandwichbauteil 13 aus einer dünnwandigen, z. B. 1 bis 2 mm starken Oberschale 17 als Deckplatte, einer dünnwandigen, z. B. 1 bis 2 mm starken Unterschale 18 als Bodenplatte und einer zwischen der Oberschale 17 und der Unterschale 18 formschlüssigen Wabenstrukturschicht 19 als Energieabsorptionsschicht ausgebildet. Die Unterschale 18 ist randseitig umlaufend mit einem Randsteg 20 versehen, dessen Höhe der Schichtstärke der Wabenstruktur 19 entspricht, um eine wannenartige Aufnahmeschale für die Wabenstruktur 19 auszubilden. Die Oberschale 17 ist hier durchgehend plattenförmig und eben ausgebildet und liegt randseitig auf dem freien Ende des Randstegs 20 der Unterschale 18 auf. In diesem Bereich sind die Oberschale 17 und die Unterschale 18 miteinander verbunden, z. B. mittels einer Klebeverbindung. Die Wabenstruktur 19 ist z. B. als gleichmäßige Wabenstruktur mit z. B. Sechseckwaben ausgebildet.

Wie dies der **Fig. 4** weiter entnommen werden kann, weist das Sandwichbauteil 13 am dem Hilfsrahmen-Querträger 5 zugeordneten Dreiecksspitzenbereich 21 einen Unterschaleneinzug 22 auf, der so ausgebildet ist, dass ein Einzugsbodenbereich unter Ausbildung einer ein Schraubendurchgangsloch 23 umgebenden Schraubenkopfauflage 24 in einer Anlageverbindung an der Oberschale 17 anliegt. Wie dies der **Fig. 4** entnommen werden kann, ist die Wabenstruktur 19 im Bereich des Unterschaleneinzugs 22 ausgespart.

Zur lösbaren Befestigung des Sandwichbauteils 13 am Hilfsrahmen-Querträger 5 ist in diesem eine Schraubenmutter 25 ortsfest angeordnet, in die von der Unterschale 18 her eine Befestigungsschraube 26 so lange eingeschraubt wird, bis deren Schraubenkopf 27 an der Schraubenkopfauflage 24 anliegt und mit einem vorgegebenen Anzugsmoment angezogen ist.

Die Festlegung des Sandwich-Versteifungselementes bzw. Sandwichbauteils 13 im Bereich der beiden querträgerfernen Dreiecksspitzenbereiche 28, 29 erfolgt in analoger Weise und ist beispielhaft für den in der Bildebene der **Fig. 1** rechten Hilfsrahmen-Längsträger 3 in der **Fig. 5** dargestellt. Dort ist an der Lenkerkonsole 12 eine Schraubenmutter 30 fest angeordnet, in die von unten her eine Befestigungsschraube 31 eingeschraubt werden kann. Die Festlegung des Sandwichbauteils 13 am in der Bildebene der **Fig. 1** linken Hilfsrahmen-Längsträger 4 erfolgt in analoger Weise mittels einer Befestigungsschraube 32, die schematisch lediglich in der **Fig. 2** **und** **3** gezeigt ist.

Wie dies insbesondere aus der **Fig. 2** ersichtlich ist, sind die Schraubendurchgangslöcher 33, 34 in den Dreiecksspitzenbereichen 28, 29 in analoger Weise in Verbindung mit einem Unterschaleneinzug 35, 36 ausgebildet.

Gemäß einer besonders bevorzugten Ausgestaltung ist sowohl die Oberschale 17 als auch die Unterschale 18 und die Wabenstruktur 19 aus einem Leichtmetall, insbesondere aus Aluminium hergestellt.

## Patentansprüche

1. Als Fahrschemel ausgebildeter Hilfsrahmen für Kraftfahrzeuge, mit seitlichen Hilfsrahmen-Längsträgern, zwischen denen ein flächiges Versteifungselement angeordnet ist, **dadurch gekennzeichnet, dass** das flächige Versteifungselement (13) mehrschichtig als Sandwichbauteil mit einer plattenartigen Oberschale (17) und einer plattenartigen Unterschale (18) sowie mit einer zwischen der Oberschale (17) und der Unterschale (18) angeordneten Energieabsorptionsschicht (19) ausgebildet ist, und die Oberschale (17) oder die Unterschale (18) zur Ausbildung einer wannenartigen Aufnahmeschale für die Energieabsorptionsschicht (19) einen randseitig wenigstens bereichsweise umlaufenden Randsteg (20) aufweist, dessen Höhe in etwa der Schichtstärke der Energieabsorptionsschicht (19) entspricht, so dass das freie Randstegende an einem Randbereich der anderen plattenartigen Schale (17) angrenzt und mit diesem verbindbar ist.

2. Hilfsrahmen nach Anspruch 1, **dadurch gekennzeichnet, dass** die Oberschale (17) und die Unterschale (18) eine gegenüber der Schichtstärke der Energieabsorptionsschicht (19) dünnere Wandstärke aufweisen.

3. Hilfsrahmen nach einem der Ansprüche 1 bis 2, **dadurch gekennzeichnet, dass** am flächigen Versteifungselement (13) lösbar am Hilfsrahmen (1) festgelegt ist.

4. Hilfsrahmen nach einem der Ansprüche 1 bis 3, **dadurch gekennzeichnet, dass** am flächigen Versteifungselement (13) eine vorgegebene Anzahl von Schraubendurchgangslöchern (23, 33, 34) ausgebildet ist, denen am Hilfsrahmen (1) jeweils Schraubpunkte mit Schraubenmuttern (25, 30) zugeordnet sind, in die Befestigungsschrauben (26, 31, 32) zur lösbaren Festlegung des Versteifungselementes (13) am Hilfsrahmen (1) einschraubbar sind.

5. Hilfsrahmen nach Anspruch 4, **dadurch gekennzeichnet, dass** die Schraubendurchgangslöcher (23, 33, 34) am Versteifungselement (13) im Bereich lokaler Untersctialeneinzüge (22, 35, 36) ausgebildet sind, in denen die Schraubenköpfe (27) der Befestigungsschrauben (26, 31, 32) im eingeschraubten Zustand aufgenommen sind.

6. Hilfsrahmen nach Anspruch 5, **dadurch gekennzeichnet, dass** der lokale Unterschaleneinzug (22, 35, 36) jeweils so ausgebildet ist, dass ein Einzugsbodenbereich unter Ausbildung einer des Schraubendurchgangsloch (23, 33, 34) umgebender Schraubenkopfauflage (24) in einer Anlageverbindung an der Oberschale (17) anliegt.

7. Hilfsrahmen nach einem der Ansprüche 1 bis 6, **dadurch gekennzeichnet, dass** die als Wabenstrukturschicht (19) ausgebildete Energieabsorptionsschicht durch eine Wabenstruktur als Wabenstrukturschicht (19) ausgebildet ist.

8. Hilfsrahmen nach Anspruch 7, **dadurch gekennzeichnet, dass** die als Wabenstrukturschicht (19) ausgebildete Energieabsorptionsschicht und/oder die Oberschale (17) und/oder die Unterschale (1) aus einem Leichtmetall, insbesondere Aluminium, und/oder aus einem Kunststoff, insbesondere einem faserverstärkten Kunststoff, und/oder aus einem Verbundwerkstoff, insbesondere einem kohlefaserverstärkten Verbundwerkstoff ausgebildet ist.

9. Hilfsrahmen nach einem der Ansprüche 1 bis 8, **dadurch gekennzeichnet, dass** das flächige Versteifungselement (13) wenigstens den Bereich der am Hilfsrahmen (1) montierten Lenkungsbauteile (6, 7, 8, 9) von unter her überdeckt.

10. Hilfsrahmen nach einem der Ansprüche 1 bis 9, **dadurch gekennzeichnet, dass** das flächige Versteifungselement (13) eine Dreiecksform, insbesondere eine gleichschenklige Dreiecksform aufweist, und dass das flächige Versteifungselement (13) im am Hilfsrahmen (1) montierten Zustand mit einem ersten Dreiecksspitzenbereich (21) an einem die beiden Hilfsrahmen-Längsträger (3, 4) verbindenden Hilfsrahmen-Querträger (5) und mit einem zweiten und dritten Dreiecksspitzenbereich (28, 29) an in etwa in Fahrzeugquerrichtung gegenüberliegenden Längsträger-Konsolen (12), insbesondere Lenkerkonsolen, angebunden ist.

## Claims

1. An auxiliary frame taking the form of a subframe for motor vehicles, having longitudinal side members, between which there is a flat stiffening element, **characterized in that** the flat stiffening element (13) is formed in multiple layers as a sandwich component with a plate-like upper shell (17) and a plate-like lower shell (18) as well as with an energy-absorbing layer (19) disposed between upper shell (17) and lower shell (18), and the upper shell (17) or lower shell (18) has a peripheral flange (20) extending around at least part of the periphery to form a trough-like shell for receiving the energy-absorbing layer (19), the height of said peripheral flange (20) corresponding more or less to the thickness of the energy-absorbing layer (19) so that the free end of the peripheral flange adjoins a peripheral region of the other plate-like shell (17) and can be attached thereto.

2. An auxiliary frame according to Claim 1, **characterized in that** the walls of the upper shell (17) and lower shell (18) have a thickness which is less than the thickness of the energy-absorbing layer (19).

3. An auxiliary frame according to one of Claims 1 or 2, **characterized in that** the flat stiffening element (13) is detachably fixed to the auxiliary frame.

4. An auxiliary frame according to one of Claims 1 to 3, **characterized in that** a given number of screw through-holes (23, 33, 34) are formed in the flat stiffening element (13), each being associated with a screw point with nut (25, 30) provided on the auxiliary frame (1), into which fastening screws (26, 31, 32) can be screwed for detachably fixing the stiffening element (13) on to the auxiliary frame (1).

5. An auxiliary frame according to Claim 4, **characterized in that** the screw through-holes (23, 33, 34) are formed in the stiffening element (13) in the region of local indentations (22, 35, 36) made in the lower shell, the screw heads (27) of the fastening screws (26, 31, 32) being accommodated in said indentations (22, 35, 36) in the screwed-down state.

6. An auxiliary frame according to Claim 5, **characterized in that** each local indentation (22, 35, 36) in the lower shell is formed in such a way that a region at the base of the indentation, whilst forming a screw head support (24) extending around the through-hole (23, 33, 34), bears against the upper shell (17) to form a fitted connection.

7. An auxiliary frame according to one of Claims 1 to 6, **characterized in that** the energy-absorbing layer is formed by means of a honeycomb structure as a honeycomb-structured layer (19).

8. An auxiliary frame according to Claim 7, **characterized in that** the energy-absorbing layer in the form of a honeycomb-structured layer (19) and/or the upper shell (17) and/or lower shell (18) is made of a light metal, in particular aluminium, and/or a synthetic material, in particular a fibre-reinforced plastic, and/or a composite material, in particular a carbon-fibre-reinforced composite material.

9. An auxiliary frame according to one of Claims 1 to 8, **characterized in that** at least the region of the steering components (6, 7, 8, 9) mounted on the auxiliary frame (1) is covered from below by the flat stiffening element (13).

10. An auxiliary frame according to one of Claims 1 to 9, **characterized in that** the flat stiffening element (13) is triangular in shape, in particular is in the shape of an isosceles triangle, and **in that**, in its state mounted on the auxiliary frame (1), the flat stiffening element (13) is attached, via a first region (21) at one point of the triangle, to a cross member (5) which connects the two longitudinal members (3, 4) of the auxiliary frame and, via second and third regions (28, 29) at second and third points of the triangle, to brackets (12), in particular steering brackets, which are located on the longitudinal members opposite one another in more or less transverse direction of the vehicle.

## Revendications

1. Cadre auxiliaire pour véhicules automobiles réalisé sous forme de faux-châssis, avec des longerons de cadre auxiliaire latéraux, entre lesquels est agencé un raidisseur plan, **caractérisé en ce que** le raidisseur plan (13) est constitué de plusieurs couches sous forme d'élément sandwich avec une coque supérieure de type plaque (17) et une coque inférieure de type plaque (18) ainsi qu'avec une couche d'absorption d'énergie (19) agencée entre la coque supérieure (17) et la coque inférieure (18), et **en ce que** la coque supérieure (17) ou la coque inférieure (18) présente, pour la réalisation d'une coque de réception de type cuve pour la couche d'absorption d'énergie (19), une arête de bord (20) entourant au moins par secteur le bord, dont la hauteur correspond à peu près à l'épaisseur de la couche d'absorption d'énergie (19) de sorte que l'extrémité libre de l'arête de bord est adjacente à une zone de bord de l'autre coque (17) de type plaque et peut être reliée à celle-ci.

2. Cadre auxiliaire selon la revendication 1, **caractérisé en ce que** la coque supérieure (17) et la coque inférieure (18) ont une épaisseur de paroi inférieure à l'épaisseur de la couche d'absorption d'énergie (19).

3. Cadre auxiliaire selon l'une quelconque des revendications 1 à 2, **caractérisé en ce que** le raidisseur plan (13) est fixé au cadre auxiliaire (1) de manière amovible.

4. Cadre auxiliaire selon l'une quelconque des revendications 1 à 3, **caractérisé en ce qu'**un nombre prédéterminé de trous de passage de vis (23, 33, 34) est réalisé sur le raidisseur plan (13), auxquels des points de vissage avec écrous (25, 30) sont respectivement affectés sur le cadre auxiliaire (1), dans lesquels des vis de fixation (26, 31, 32) peuvent être vissées pour la fixation amovible du raidisseur (13) sur le cadre auxiliaire (1)

5. Cadre auxiliaire selon la revendication 4, **caractérisé en ce que** les trous de passage de vis (23, 33, 34) sont réalisés au niveau du raidisseur (13) dans la zone de renfoncements locaux de la coque inférieure (22, 35, 36), dans lesquels les têtes de vis (27) des vis de fixation (26, 31, 32) sont reçues à l'état vissé.

6. Cadre auxiliaire selon la revendication 5, **caractérisé en ce que** le renfoncement local de la coque inférieure (22, 35, 36) est réalisé respectivement de telle sorte qu'une zone de fond de renfoncement s'appuie contre la coque supérieure (17) en formant un appui de tête de vis (24) entourant le trou de passage de vis (23, 33, 34) dans une liaison d'appui.

7. Cadre auxiliaire selon l'une quelconque des revendications 1 à 6, **caractérisé en ce que** la couche d'absorption d'énergie réalisée sous forme de couche à structure en nid d'abeilles (19) est formée par une structure en nid d'abeilles sous forme de couche à structure en nid d'abeilles (19).

8. Cadre auxiliaire selon la revendication 7, **caractérisé en ce que** la couche d'absorption d'énergie réalisée sous forme de couche à structure en nid d'abeilles (19) et/ou la coque supérieure (17) et/ou la coque inférieure (18) est en un métal léger, en particulier en aluminium, et/ou en un plastique, en particulier en un plastique renforcé de fibres et/ou en un matériau composite, en particulier en un matériau composite renforcé de fibres de carbone.

9. Cadre auxiliaire selon l'une quelconque des revendications 1 à 8, **caractérisé en ce que** le raidisseur plan (13) couvre par le bas au moins la zone des éléments de direction (6, 7, 8, 9) montés sur le cadre auxiliaire (1).

10. Cadre auxiliaire selon l'une quelconque des revendications 1 à 9, **caractérisé en ce que** le raidisseur plan (13) présente une forme triangulaire, en particulier une forme de triangle isocèle et **en ce que** le raidisseur plan (13) est attaché à l'état monté sur le cadre auxiliaire (1) avec une première zone sommitale de triangle (21) au niveau d'une traverse de cadre auxiliaire (5) reliant les deux longerons de cadre auxiliaire (3, 4) et avec une deuxième et troisième zone sommitale de triangle (28, 29) au niveau de consoles de longeron (12) se faisant face à peu près dans le sens transversal du véhicule, en particulier des consoles de direction.
